# EUROPÄISCHE PATENTSCHRIFT

(11) **EP 2 952 276 B1**
(45) Veröffentlichungstag und Bekanntmachung des Hinweises auf die Patenterteilung: **07.11.2018**
(21) Anmeldenummer: 15001608.7
(22) Anmeldetag: 29.05.2015
(51) Int. Cl.: B22F 3/105, B22F 3/15, B22F 3/24, C22C 1/04, C22C 32/00

(54) **VERFAHREN ZUR WÄRMEBEHANDLUNG EINES WERKSTÜCKS AUS EINER NICKELBASISLEGIERUNG**
METHOD FOR THE HEAT TREATMENT OF A WORKPIECE MADE FROM A NICKEL BASED ALLOY
PROCEDE DESTINE AU TRAITEMENT THERMIQUE D'UNE PIECE EN ALLIAGE A BASE DE NICKEL

(30) Priorität: 03.06.2014 DE 102014007867
(43) Veröffentlichungstag der Anmeldung: 09.12.2015
(73) Patentinhaber: Airbus Defence and Space GmbH, 85521 Ottobrunn (DE)
(72) Erfinder: Palm, Frank, 82008 Unterhaching (DE)
(74) Vertreter: LKGLOBAL Lorenz & Kopf PartG mbB Patentanwälte

(56) Entgegenhaltungen:
- US-A- 5 640 667
- US-A1- 2013 228 302
- US-A1- 2013 263 977
- A Strondl ET AL: "Microstructure and mechanical properties of nickel based superalloy IN718 produced by rapid prototyping with electron beam melting (EBM)", Materials Science and Technology, vol. 27, no. 5, 1 May 2011 (2011-05-01), pages 876-883, XP055479008, GB ISSN: 0267-0836, DOI: 10.1179/026708309X12468927349451
- CHANG LITAO ET AL: "Effect of heat treatment on microstructure and mechanical properties of the hot-isostatic-pressed Inconel 718 powder compact", JOURNAL OF ALLOYS AND COMPOUNDS, vol. 590, 21 December 2013 (2013-12-21), pages 227-232, XP028605079, ISSN: 0925-8388, DOI: 10.1016/J.JALLCOM.2013.12.107

## Beschreibung

Die vorliegende Offenbarung betrifft ein Verfahren zur Wärmebehandlung eines Werkstücks aus der Nickelbasislegierung Inconel 718.

Nickelbasislegierungen sind Werkstoffe, deren Hauptbestandteil Nickel ist. Nickelbasislegierungen verfügen über eine gute Korrosions- und/oder Hochtemperaturbeständigkeit. Zur Verwendung kommen z.B. Nickel-Kupfer-, Nickel-Eisen-, Nickel-Eisen-Chrom-, Nickel-Chrom-, Nickel-Molybdän-Chrom, Nickel-Chrom-Kobalt-Nickellegierungen.

Der Hauptvorteil der Nickelbasislegierungen besteht in ihren Kriech- und Ermüdungsfestigkeiten bei hohen Temperaturen. Die Festigkeit wird dabei zum Beispiel durch Zulegieren von Aluminium, Titan, Niob und/oder Tantal erreicht. Bei der kommerziell am weitesten verbreiteten Nickelbasislegierung Inconel 718 findet eine Aushärtung durch Nb[Nb,Ta]- Ausscheidungen statt. Das Kriechen wird zusätzlich durch Korngrenzennetzwerke von M23C6-Karbiden verhindert.

Zur Herstellung von hochfesten, komplexen Bauteilen aus einer Nickelbasislegierung werden heute zunehmend sogenannte additive Fertigungsverfahren (in der VDI-Norm 3404 auch Schichtfertigungsverfahren genannt) wie das Laser Pulver-Bett-Schmelzen (selektives Laserschmelzen (SLM)) verwendet. Es wird mittlerweile in den Medien auch gerne vereinfacht als 3D-Drucken bezeichnet.

Das selektive Laserschmelzen ist ein generatives Fertigungsverfahren, bei dem der zu verarbeitende Werkstoff in Pulverform in einer dünnen Schicht auf einer Grundplatte aufgebracht wird. Der pulverförmige Werkstoff wird mittels Laserstrahlung lokal vollständig umgeschmolzen und bildet nach der Erstarrung eine feste Materialschicht. Anschließend wird die Grundplatte um den Betrag einer Schichtdicke abgesenkt und erneut Pulver aufgetragen. Dieser Zyklus wird solange wiederholt, bis alle Schichten des zuvor virtuell Im Computer in Schichten zerlegten Materialkörpers in der Laser-Pulverbett-Maschine real umgeschmolzen sind und so schichtweise ein 3D-Abbild des im Computer existierenden Körpers entstanden ist.

Durch selektives Laserschmelzen gefertigte Bauteile zeichnen sich durch große Bauteildichten aus, die gewährleisten, dass die mechanischen Eigenschaften des generativ hergestellten Bauteils weitgehend denen des Grundwerkstoffs entsprechen. Gegenüber Gussverfahren zeichnet sich das selektive Laserschmelzen dadurch aus, dass Werkzeuge oder Formen entfallen und dadurch die Produkteinführungszeit reduziert werden kann. Ein weiterer Vorteil ist die große Geometriefreiheit, die Bauteilformen ermöglicht, die mit formgebundenen Verfahren nicht oder nur mit großem Aufwand herstellbar sind.

Das selektive Laserschmelzen erzeugt jedoch mitunter in den Schmelzlagen Bindefehler, Lunker und andere Merkmale, die die nutzbare Werkstofffestigkeit herabsetzen. Zur Minimierung dieses negativen Effekts erfolgt eine Wärmebehandlung nach dem direkten Bauteilaufbau, die unter Verwendung von Druck nicht nur Festigkeit erzeugt, sondern auch Poren im aufgebauten Material schließt (Nachverdichten). Der Prozess ist allgemein unter der Bezeichnung HIPPEN (= Heiß-iso-statisches Pressen) bekannt.

Eine Wärmebehandlung ist ein Verfahren zur Behandlung eines Werkstückes, wobei das Werkstück Änderungen der Temperatur oder des Temperaturablaufes unterworfen wird, um bestimmte Werkstoffeigenschaften zu erzielen.

Bei Nickelbasislegierungen, insbesondere wenn es sich um Gussmaterial handelt, werden üblicherweise mehrere verschiedene Wärmebehandlungen verwendet, wie ein Spannungsarmglühen, ein Nachverdichten, eine Löseglühen mit Schnellabkühlung und ein Auslagern. Dieser Ablauf dauert üblicherweise in Summe mehr als 16 Stunden. Die Wirksamkeit dieser Wärmebehandlungen hinsichtlich der Reduktion von Bindefehlern, Poren und anderen Aufbaufehlern ist jedoch gerade bei Nickelbasislegierungen begrenzt bzw. von den Prozessparametern abhängig, da ihre hohe Warmfestigkeit (z.B. für Inconel 718 ca. 800 N/mm2 bei 750°C) das Schließen von Bindefehlern, Lunkern und anderen inneren "Gefügefehlern" behindert. Weiterhin wird das sehr feine Gussgefüge, welches beim selektiven Laserschmelzen entsteht, durch die hohen Prozesstemperaturen und die langen Verweilzeiten signifikant und irreversibel geschädigt, d.h. vergröbert. Für multi-kristalline metallische Konstruktionswerkstoffe gilt, je feiner das Korn, desto besser die die dynamischen Werkstoffeigenschaften ("Hall-Petch Beziehung"). Daraus resultierend sind durch hoch-temperierte (≥ 960°C) und lang andauernde Wärmebehandlungen (≥ 10 Std.) die erreichbare Festigkeit, die Ermüdungsfestigkeit und die Zähigkeit nachhaltig beeinträchtigt.

Aufgabe der vorliegenden Erfindung ist daher die Bereitstellung eines verbesserten Verfahrens zur Wärmebehandlung eines Werkstücks aus einer Nickelbasislegierung, welches insbesondere schneller durchgeführt werden kann.

Diese Aufgabe wird durch ein Verfahren zur Wärmebehandlung eines Werkstücks gemäß unabhängiger Anspruch 1 gelöst. Vorteilhafte Ausführungsformen und Weiterbildungen sind den Unteransprüchen und der nachfolgenden Beschreibung zu entnehmen.

Es wird vorgeschlagen, ein Verfahren zur Wärmebehandlung eines Werkstücks aus der Nickelbasislegieung Inconel 718 bereitzustellen. Das Werkstück kann ein Bauteil, ein Halbzeug oder ähnliches sein. Das Werkstück kann durch ein additives Schichtfertigungsverfahren hergestellt worden sein, bevorzugt durch LaserPulverschmelzen (auch Selektives Laserschmelzen genannt (engl. selective laser melting (SLM))) und weiter bevorzugt durch ein Laser-Pulver-BettSchmelzverfahren. Vorteilhafterweise erfolgt die Wärmebehandlung direkt nach dem Schichtfertigungsverfahren, da so die besten Festigkeitseigenschaften erzielt werden.

Das Verfahren zur Wärmebehandlung eines Werkstücks aus einer Nickelbasislegierung umfasst die folgenden Schritte:
- Aufheizen des Werkstücks auf einen ersten Temperaturbereich,
- Halten des ersten Temperaturbereichs für eine erste Zeitdauer,
- Abkühlen des Werkstücks auf einen zweiten Temperaturbereich,
- Halten des zweiten Temperaturbereichs für eine zweite Zeitdauer,
- Abkühlen des Werkstücks auf einen dritten Temperaturbereich,
- Halten des dritten Temperaturbereichs für eine dritte Zeitdauer, und
- Aufbringen von allseitigem Druck eines ersten Druckbereichs auf das Werkstück zumindest teilweise während der ersten, zweiten und dritten Zeitdauern.

Der erste Temperaturbereich liegt dabei zwischen 640 und 960°C und die erste Zeitdauer zwischen 30 und 90 Minuten. Der zweite Temperaturbereich liegt dabei zwischen 600 und 910°C und die zweite Zeitdauer zwischen 60 und 180 Minuten. Der dritte Temperaturbereich liegt dabei zwischen 520 und 780°C und die dritte Zeitdauer zwischen 120 und 360 Minuten. Der erste Druckbereich liegt dabei zwischen 200 und 4000 bar. Allseitiger Druck bedeutet, dass Druck und insbesondere Gasdruck von allen Seiten auf das Werkstück wirkt.

Diese erfindungsgemäße thermomechanische Wärmebehandlung wird gegenüber bekannten Wärmebehandlungen für Inconel 718 schneller und bei niedrigeren Temperaturen durchgeführt. Die Zeitdauer wird gegenüber bekannten Wärmebehandlungen halbiert. Auf diese Weise werden keine bleibenden Werkstoffschädigungen durch unerwünschte Grobkornbildung bewirkt. Schnellere Prozesszeiten führen zu geringeren Prozesskosten. Insgesamt wird eine robustere Prozessführung beim Laser-Pulverschmelzen und insbesondere beim LaserPulverbett- Schmelzen erreicht mit besseren Fertigungserträgen, weniger Fehlern im Produkt, kürzere Prozesszeiten und geringere Prozesskosten.

Das Festigkeitsverhalten des Werkstücks wird deutlich verbessert, da Bindefehler, Poren und andere Aufbaufehler weiter reduziert bzw. geschlossen werden, was durch eine verringerte Warmfestigkeit, d.h. einen geringeren Werkstoffwiderstand erreicht wird. Die verringerte Warmfestigkeit z.B. im sehr feinkörnig strukturierten Inconel 718 SLM Material ermöglicht bzw. begünstigt unter anderem die gegenüber bekannten Verfahren verkürzte Prozessdauer und die wirkungsvolle Materialnachverdichtung z.B. mittels HIPPEN schon bei einer verringerten Wärmebehandlungstemperatur. Die niedrigere Temperatur verbunden mit der sehr kurzen Verweilzeit verhindert meist vollständig die Entstehung von groben Kornstrukturen und ermöglicht so die oben beschriebene außergewöhnlich gute Festigkeit des Werkstücks. Auch durch das selektive Laserschmelzen bedingte Erstarrungseigenspannungen werden durch stimulierten Kriechvorgänge erheblich effektiver abgebaut. Insgesamt werden bessere Werkstoffeigenschaften und Kennwerte erreicht, und insbesondere eine bessere Dauerfestigkeit und Risszähigkeit.

Das Verfahren umfasst den Schritt eines Einlegens des Werkstücks in eine heißisostatische Presse, sodass das Verfahren in Inneren der heißisostatische Presse abläuft. Das so durchgeführte heißisostatische Pressen (HIPPEN) führt zu einem gleichzeitigen heiß Pressen und Sintern des Werkstücks vorzugsweise in einem auf das Bauteil bezogenen reaktionsarmen Gas, wie z.B. Argon. Das Werkstück wird entweder für sich (wie mittels SLM aufgebaut) bei Vorhandensein einer gasdichten Oberfläche oder, falls Oberflächenrisse oder andere Imperfektionen den Druckaufbau erschweren könnten, in einen deformierbaren, dichten Behälter eingesetzt, der in einen beheizbaren Druckkessel kommt. Das Werkstück wird dann den oben genannten Wärmebehandlungsschritten unterzogen, während der Gasdruck von allen Seiten auf das Werkstück wirkt. Beim HIPPEN ist die Nachverdichtungseffizienz meist sehr gut. Werkstücke, die so hergestellt werden, können daher extrem dicht sein und isotrope Eigenschaften aufweisen.

Bevorzugt erfolgen während der ersten bis dritten Zeitdauern ein Spannungsarmglühen, ein Nachverdichten und ein Auslagern zur Festigkeitssteigerung des Werkstücks.

Bevorzugt liegt der erste Temperaturbereich zwischen 720 und 880°C, weiter bevorzugt bei 800°C. Bevorzugt liegt der zweite Temperaturbereich zwischen 680 und 840°C, weiter bevorzugt bei 760°C. Bevorzugt liegt der dritte Temperaturbereich zwischen 580 und 720°C, weiter bevorzugt bei 650°C.

Bevorzugt liegt die erste Zeitdauer zwischen 45 und 75 Minuten, weiter bevorzugt bei 60 Minuten. Bevorzugt liegt die zweite Zeitdauer zwischen 90 und 150 Minuten, weiter bevorzugt bei 120 Minuten. Bevorzugt liegt die dritte Zeitdauer zwischen 180 und 300 Minuten, weiter bevorzugt bei 240 Minuten.

Der erste Druckbereich liegt zwischen 200 und 4000 bar. Bevorzugt liegt der erste Druckbereich zwischen 300 und 3500 bar, und weiter bevorzugt zwischen 1000 und 3000 bar. Der Druck kann, muss aber nicht während der gesamten ersten, zweiten und dritten Zeitdauern auf das Werkstück wirken. Der Druck kann, muss aber nicht während der gesamten ersten, zweiten und dritten Zeitdauern konstant sein. So kann der Druck zwischen den Zeitdauern oder zu Anfang und Ende der Zeitdauern zu- oder abnehmen. Auch kann der Druck z.B. innerhalb der ersten Zeitdauer zunehmen und während der dritten Zeitdauer abnehmen.

Es ist auch möglich, den Druckbereich zwischen den ersten, zweiten und dritten Zeitdauern zu variieren. So kann der Druckbereich während der ersten Zeitdauer in einem niedrigeren Bereich (z.B. zwischen 200 und 2000 bar) liegen, während der zweiten Zeitdauer in einem mittleren Bereich (z.B. zwischen 1500 und 3000 bar), und während der dritten Zeitdauer in einem höheren Bereich (z.B. zwischen 2500 und 4000 bar). Die Begriffe niedrig, mittel und hoch sind im Vergleich mit den jeweils anderen Druckbereichen zu verstehen.

Es ist weiterhin möglich, den Druckbereich innerhalb der ersten, zweiten und dritten Zeitdauern zu variieren. So kann der Druck z.B. innerhalb einer Zeitdauer ansteigen oder abfallen. Die Rate der Druckänderung innerhalb einer der ersten, zweiten und dritten Zeitdauern kann zwischen 100 und 500 bar pro 10 Minuten liegen.

Vorteilhafterweise erfolgt das Aufheizen mit einer ersten Rate zwischen 25 und 75°K pro 60 Minuten, bevorzugt bei 50°K pro 60 Minuten. Das Aufheizen kann auch bis zum Erreichen einer Temperatur von 500°C schneller als mit der ersten Rate erfolgen, bevorzugt mit einer zweiten Rate von 0,01 bis 100°K pro 60 Minuten. Das Aufheizen kann auch ab Erreichen einer Temperatur von 500°C schneller als mit der ersten Rate erfolgen, bevorzugt mit einer zweiten Rate von 0,01 bis 100°K pro 60 Minuten.

Vorteilhafterweise erfolgt das Abkühlen mit einer ersten Rate zwischen 25 und 75°K pro 60 Minuten, bevorzugt bei 50°K pro 60 Minuten. Das Abkühlen kann auch bis zum Erreichen einer Temperatur von 500°C schneller als mit der ersten Rate erfolgen, bevorzugt mit einer zweiten Rate von 0,01 bis 100°K pro 60 Minuten. Das Abkühlen kann auch ab Erreichen einer Temperatur von 500°C schneller als mit der ersten Rate erfolgen, bevorzugt mit einer zweiten Rate von 0,01 bis 100°K pro 60 Minuten. Das Abkühlen erfolgt bevorzugt im verwendeten Ofen bzw. in der HIPPE.

Diese erfindungsgemäße Wärmebehandlung ist auch auf andere additive Schichtfertigungsverfahren übertragbar, wie z.B. Laser Pulver-Düse, Laser Draht-Düse oder Elektronenstrahl-Pulverbett oder Elektronenstrahl-Draht Verfahren.

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen. In den Figuren stehen gleiche Bezugszeichen für gleiche oder ähnliche Objekte.

Nachfolgend wird anhand der beigefügten Zeichnungen näher auf Ausführungsbeispiele der Erfindung eingegangen. Es zeigen:
- **Fig. 1**: zeigt ein Verfahren zur Wärmebehandlung eines Werkstücks aus einer Nickelbasislegierung.
- **Fig. 2**: zeigt eine beispielhafte Ausführungsform eines Temperaturverlaufs der Wärmebehandlung.
- **Fig. 3**: zeigt ein Werkstücks aus einer Nickelbasislegierung.

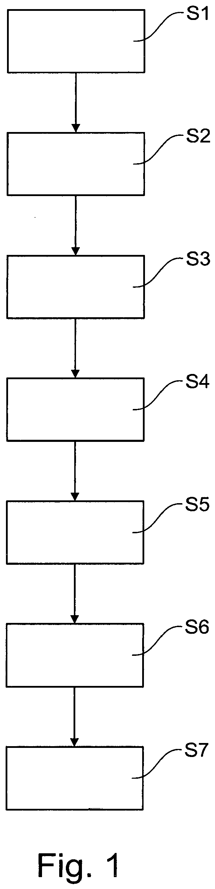

**Fig. 1** zeigt ein Verfahren zur Wärmebehandlung eines Werkstücks 1 aus einer Nickelbasislegierung. Es umfasst die folgenden Schritte:
S1: Aufbringen von allseitigem Druck eines ersten Druckbereichs auf das Werkstück,
S2: Aufheizen des Werkstücks 1 auf einen ersten Temperaturbereich,
S3: Halten des ersten Temperaturbereichs für eine erste Zeitdauer,
S4: Abkühlen des Werkstücks 1 auf einen zweiten Temperaturbereich,
S5: Halten des zweiten Temperaturbereichs für eine zweite Zeitdauer,
S6: Abkühlen des Werkstücks 1 auf einen dritten Temperaturbereich, und
S7: Halten des dritten Temperaturbereichs für eine dritte Zeitdauer

Der erste Druckbereich liegt dabei zwischen 200 und 4000 bar. Der erste Temperaturbereich liegt dabei zwischen 640 und 960°C und die erste Zeitdauer zwischen 30 und 90 Minuten. Der zweite Temperaturbereich liegt dabei zwischen 600 und 910°C und die zweite Zeitdauer zwischen 60 und 180 Minuten. Der dritte Temperaturbereich liegt dabei zwischen 520 und 780°C und die dritte Zeitdauer zwischen 120 und 360 Minuten.

In einer beispielhaften Ausführungsform wird das Verfahren zur Wärmebehandlung eines Werkstücks 1 aus Inconel 718 erläutert. Es läuft wie folgt ab:
Eine Prozesskammer einer Laser-Pulverbett-Anlage wird mit Inconel 718 Pulver befüllt, die Anlage wird initialisiert, ein Rechenprogramm und eine Maschinensteuerung wird gestartet. Der Aufbau des gewünschten Werkstücks 1, Bauteils oder einer Teststruktur erfolgt mittels Schmelzen von definierten Inconel 718 Metallpulverschichten auf eine Aufbauplatine. Die Dauer liegt abhängig von der Höhe und Komplexität des Werkstücks 1 zwischen 60 und 6000 min. Danach wird das Bauteil aus der Prozesskammer entnommen, während das Werkstück 1 und die Aufbauplatine noch miteinander verbunden sind.

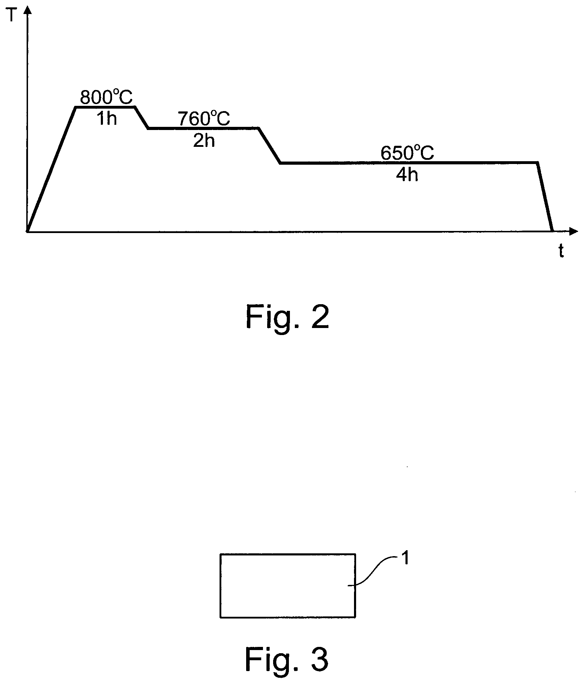

Es folgt die Wärmebehandlung des Werkstücks 1 zusammen mit der Aufbauplatine in eine heißisostatische Presse unter allseitigem Druck und einer gestuften Temperaturführung. **Fig. 2** zeigt eine beispielhafte Ausführungsform eines Temperaturverlaufs der Wärmebehandlung. Die ersten, zweiten und dritten Temperaturbereiche und Zeitdauern gelten hier für mindestens einen bestimmten Werkstoff, nämlich Inconel 718, und umfassen daher jeweils nur einen Einzelwert:
Schritt 1: 800°C / 1 Stunde
Schritt 2: 760°C / 2 Stunden
Schritt 3: 650°C / 4 Stunden

Die ersten, zweiten und dritten Temperaturbereiche können um+/- 20 Prozent um den oben genannten Wert liegen. Die ersten, zweiten und dritten Zeitdauern können um+/- 50 Prozent um den oben genannten Wert liegen. Das Aufheizen und Abheizen bzw. Abkühlen erfolgt mit ca. 50°K/60 min. Bis/ab ca. 500°C kann schneller aufgeheizt oder abgekühlt werden. Die Wärmebehandlung läuft unter allseitigem Druck von 1500 bar und vorzugsweise mehr als 2000 bar.

Die oben beschriebene Wärmebehandlung entspricht einem einzigen Wärmebehandlungsschritt, bei dem ein Spannungsarmglühen, ein Nachverdichten und ein Auslagern auf hohe Festigkeit zusammen erreicht werden. Auf diese Weise wird einerseits eine Nachverdichtung des SLM Inconel 718 Gefüges erzielt, und andererseits eine NbNb (y ") Phase ausgeschieden, die eine sehr hohe Festigkeit ermöglicht. Ein solches Werkstück 1 aus einer Nickelbasislegierung, welches nach dem beschriebenen Verfahren wärmebehandelt wurde, ist in **Fig. 3** gezeigt.

Die oben beschriebene Wärmebehandlung verkürzt die Prozessdauer deutlich und macht sie wirtschaftlicher gegenüber bekannten Verfahren. Es wird gegenüber bekannten Verfahren auch der Einsatz von niedrigeren Temperaturen ermöglicht. Die niedrigeren Temperaturen verbunden mit der sehr kurzen Verweilzeit verhindert meist vollständig die Entstehung von groben Kornstrukturen und ermöglicht so eine außergewöhnlich gute Festigkeit des Werkstücks 1.

## Patentansprüche

1. Ein Verfahren zur Wärmebehandlung eines Werkstücks (1) aus der Nickelbasislegierung Inconel 718, umfassend die folgenden Schritte:
- Aufheizen des Werkstücks (1) auf einen ersten Temperaturbereich,
- Halten des ersten Temperaturbereichs für eine erste Zeitdauer,
- Abkühlen des Werkstücks (1) auf einen zweiten Temperaturbereich,
- Halten des zweiten Temperaturbereichs für eine zweite Zeitdauer,
- Abkühlen des Werkstücks (1) auf einen dritten Temperaturbereich,
- Halten des dritten Temperaturbereichs für eine dritte Zeitdauer, und
- Aufbringen von allseitigem Druck eines ersten Druckbereichs auf das Werkstück (1) zumindest teilweise während der ersten, zweiten und dritten Zeitdauern,
wobei der erste Druckbereich zwischen 200 und 4000 bar liegt,
wobei der erste Temperaturbereich zwischen 640 und 960 °C liegt,
wobei die erste Zeitdauer zwischen 30 und 90 Minuten beträgt,
wobei der zweite Temperaturbereich zwischen 600 und 910 °C liegt,
wobei die zweite Zeitdauer zwischen 60 und 180 Minuten beträgt,
wobei der dritte Temperaturbereich zwischen 520 und 780 °C liegt,
wobei die dritte Zeitdauer zwischen 120 und 360 Minuten beträgt; und
wobei das Verfahren den Schritt eines Einlegens des Werkstücks (1) in eine heißisostatische Presse umfasst, sodass das Verfahren in Inneren der heißisostatische Presse abläuft.

2. Verfahren nach Anspruch 1, wobei das Werkstück (1) mit einem Schichtfertigungsverfahren hergestellt ist, bevorzugt mit einem Laser-Pulver-BettSchmelzverfahren.

3. Verfahren nach einem der vorherigen Ansprüche, wobei der erste Druckbereich zwischen 300 und 3500 bar, bevorzugt zwischen 1000 und 3000 bar liegt.

4. Verfahren nach einem der vorherigen Ansprüche, wobei der erste Temperaturbereich zwischen 720 und 880 °C liegt, bevorzugt bei 800 °C, und/oder die erste Zeitdauer zwischen 45 und 75 Minuten liegt, bevorzugt bei 60 Minuten.

5. Verfahren nach einem der vorherigen Ansprüche, wobei der zweite Temperaturbereich zwischen 680 und 840 °C liegt, bevorzugt bei 760 °C, und/oder die zweite Zeitdauer zwischen 90 und 150 Minuten liegt, bevorzugt bei 120 Minuten.

6. Verfahren nach einem der vorherigen Ansprüche, wobei der dritte Temperaturbereich zwischen 580 und 720 °C liegt, bevorzugt bei 650 °C, und/oder die dritte Zeitdauer zwischen 180 und 300 Minuten liegt, bevorzugt bei 240 Minuten.

7. Verfahren nach einem der vorherigen Ansprüche, wobei das Verfahren in einem reaktionsarmen Gas, vorzugsweise in Argon durchgeführt wird.

8. Verfahren nach einem der vorherigen Ansprüche, wobei das Aufheizen und/oder Abkühlen mit einer ersten Rate zwischen 25 und 75 °K pro 60 Minuten erfolgt, bevorzugt bei 50 °K pro 60 Minuten.

9. Verfahren nach Anspruch 8, wobei das Aufheizen und/oder Abkühlen bis Erreichen einer Temperatur von 500 °C schneller als mit der ersten Rate erfolgt.

10. Verfahren nach Anspruch 8, wobei das Aufheizen und/oder Abkühlen ab Erreichen einer Temperatur von 500 °C schneller als mit der ersten Rate erfolgt.

11. Verfahren nach einem der vorherigen Ansprüche, wobei während der ersten bis dritten Zeitdauer ein Spannungsarmglühen, Nachverdichten und Auslagern zur Festigkeitssteigerung des Werkstücks (1) erfolgt.

## Claims

1. A method of heat treatment of a workpiece (1) made of the nickel-base alloy Inconel 718, comprising the following steps:
- heating the workpiece (1) to a first temperature range,
- maintaining the first temperature range for a first period of time,
- cooling the workpiece (1) to a second temperature range,
- maintaining the second temperature range for a second period of time,
- cooling the workpiece (1) to a third temperature range,
- maintaining the third temperature range for a third period of time,
- applying pressure in a first pressure range to all sides of the workpiece (1) at least during part of the first, second and third periods of time, where the first pressure range is between 200 and 4000 bar,
where the first temperature range is between 640 and 960°C,
where the first period of time is between 30 and 90 minutes,
where the second temperature range is between 600 and 910°C,
where the second period of time is between 60 and 180 minutes,
where the third temperature range is between 520 and 780°C,
where the third period of time is between 120 and 360 minutes; and
where the method includes the step of placing the workpiece (1) into a hot isostatic press, such that the method proceeds within the hot isostatic press.

2. Method according to Claim 1, wherein the workpiece (1) has been produced by a layer manufacturing method, preferably by a laser powder bed fusion method.

3. Method according to either of the preceding claims, wherein the first pressure range is between 300 and 3500 bar, preferably between 1000 and 3000 bar.

4. Method according to any of the preceding claims, wherein the first temperature range is between 720 and 880°C, preferably 800°C, and/or the first period of time is between 45 and 75 minutes, preferably 60 minutes.

5. Method according to any of the preceding claims, wherein the second temperature range is between 680 and 840°C, preferably 760°C, and/or the second period of time is between 90 and 150 minutes, preferably 120 minutes.

6. Method according to any of the preceding claims, wherein the third temperature range is between 580 and 720°C, preferably 650°C, and/or the third period of time is between 180 and 300 minutes, preferably 240 minutes.

7. Method according to any of the preceding claims, wherein the method is conducted in a gas of low reactivity, preferably in argon.

8. Method according to any of the preceding claims, wherein the heating and/or cooling is effected at a first rate between 25 and 75°K per 60 minutes, preferably at 50°K per 60 minutes.

9. Method according to Claim 8, wherein the heating and/or cooling is effected faster than the first rate until attainment of a temperature of 500°C.

10. Method according to Claim 8, wherein the heating and/or cooling is effected faster than the first rate from attainment of a temperature of 500°C.

11. Method according to any of the preceding claims, wherein stress-relief annealing, re-pressing and age-hardening to increase the strength of the workpiece (1) are effected during the first to third periods of time.

## Revendications

1. Procédé de traitement thermique d'une pièce (1) en l'alliage à base de nickel Inconel 718, comprenant les étapes suivantes :
- le chauffage de la pièce (1) dans une première plage de température,
- le maintien de la première plage de température pendant une première durée,
- le refroidissement de la pièce (1) dans une deuxième plage de température,
- le maintien de la deuxième plage de température pendant une deuxième durée,
- le refroidissement de la pièce (1) dans une troisième plage de température,
- le maintien de la troisième plage de température pendant une troisième durée, et
- l'application d'une pression d'une première plage de pression sur tous les côtés de la pièce (1) au moins en partie pendant la première, la deuxième et la troisième durée,
la première plage de pression étant comprise entre 200 et 4 000 bar,
la première plage de température étant comprise entre 640 et 960 °C,
- la première durée étant comprise entre 30 et 90 minutes,
la deuxième plage de température étant comprise entre 600 et 910 °C,
la deuxième durée étant comprise entre 60 et 180 minutes,
la troisième plage de température étant comprise entre 520 et 780 °C,
la troisième durée étant comprise entre 120 et 360 minutes, et
le procédé comprenant l'étape d'insertion de la pièce (1) dans une presse isostatique à chaud, de telle sorte que le procédé se déroule à l'intérieur de la presse isostatique à chaud.

2. Procédé selon la revendication 1, dans lequel la pièce (1) est fabriquée par un procédé de fabrication en couches, de préférence par un procédé de fusion de lits de poudre par laser.

3. Procédé selon l'une quelconque des revendications précédentes, dans lequel la première plage de pression est comprise entre 300 et 3 500 bar, de préférence entre 1 000 et 3 000 bar.

4. Procédé selon l'une quelconque des revendications précédentes, dans lequel la première plage de température est comprise entre 720 et 880 °C, de préférence est de 800 °C, et/ou la première durée est comprise entre 45 et 75 minutes, de préférence est de 60 minutes.

5. Procédé selon l'une quelconque des revendications précédentes, dans lequel la deuxième plage de température est comprise entre 680 et 840 °C, de préférence est de 760 °C, et/ou la deuxième durée est comprise entre 90 et 150 minutes, de préférence est de 120 minutes.

6. Procédé selon l'une quelconque des revendications précédentes, dans lequel la troisième plage de température est comprise entre 580 et 720 °C, de préférence est de 650 °C, et/ou la troisième durée est comprise entre 180 et 300 minutes, de préférence est de 240 minutes.

7. Procédé selon l'une quelconque des revendications précédentes, dans lequel le procédé est réalisé dans un gaz faiblement réactif, de préférence dans de l'argon.

8. Procédé selon l'une quelconque des revendications précédentes, dans lequel le chauffage et/ou le refroidissement ont lieu à une première vitesse comprise entre 25 et 75 °K par 60 minutes, de préférence de 50 °K/60 minutes.

9. Procédé selon la revendication 8, dans lequel le chauffage et/ou le refroidissement jusqu'à ce qu'une température de 500 °C soit atteinte ont lieu plus rapidement qu'à la première vitesse.

10. Procédé selon la revendication 8, dans lequel le chauffage et/ou le refroidissement dès qu'une température de 500 °C a été atteinte ont lieu plus rapidement qu'à la première vitesse.

11. Procédé selon l'une quelconque des revendications précédentes, dans lequel un recuit de détente, un scellage et une précipitation pour augmenter la résistance de la pièce (1) ont lieu pendant la première à la troisième durée.
